# EUROPEAN PATENT SPECIFICATION

(11) **EP 4 246 482 B1**
(45) Date of publication and mention of the grant of the patent: **28.10.2026**
(21) Application number: 23162673.0
(22) Date of filing: 17.03.2023
(51) Int. Cl.: G08B 13/196

(54) **USER INTERFACE NAVIGATION METHOD FOR EVENT-RELATED VIDEO**
BENUTZERSCHNITTSTELLENNAVIGATIONSVERFAHREN FÜR EREIGNISBEZOGENE VIDEOS
PROCÉDÉ DE NAVIGATION D'INTERFACE UTILISATEUR POUR VIDÉO ASSOCIÉE À UN ÉVÉNEMENT

(30) Priority: 18.03.2022 US 202263321495 P
(43) Date of publication of application: 20.09.2023
(73) Proprietor: Honeywell International Inc., Charlotte, NC 28202 (US)
(72) Inventor: GARMON, Richard, Pittsford, 14534 (US); COX, Clifford, Pittsford, 14534 (US)
(74) Representative: Dehns

(56) References cited:
- US-A1- 2006 239 645
- US-A1- 2017 270 365
- US-B2- 10 296 194

## Description

The present invention generally relates to surveillance camera video, and, more specifically, to a method and an apparatus for displaying video captured by the surveillance cameras.

Video captured by surveillance cameras is conventionally displayed in a grid that depicts the view from multiple surveillance cameras simultaneously. This allows a security guard to monitor all the views simultaneously. However, the grid method becomes increasingly more difficult as more and more surveillance cameras get added. For example, as more cameras get added the individual grids for each surveillance camera may need to shrink and there may just be too many surveillance cameras for one security guard to monitor. Accordingly, there is a need for a more efficient solution. US 10296194 B2 discloses displaying a camera history timeline on a mobile device, including displaying a chronologically ordered sequence of event identifiers.

According to a first aspect of the invention, a method for analyzing and displaying surveillance video using a video management system having a processor and a memory comprising computer-executable instructions for the processor is provided. The method includes: capturing, using a first video camera, a first plurality of video frames of a first area at a first time; analyzing, using the video management system, the first plurality of video frames to determine a first activity of interest within one or more first video frames of the first plurality of video frames or linking, using the video management system, the first plurality of video frames to one or more alarms received to determine a first activity of interest within one or more first video frames of the first plurality of video frames; generating, using the video management system, a first activity of interest video clip from the one or more first video frames; and displaying the first activity of interest video clip within a first carousel on a display device, wherein the first activity of interest video clip is configured to rotate around a first axis within the first carousel on the display device. The method includes: capturing, using a second video camera, a second plurality of video frames of at least a portion of the first area at the first time; analyzing, using the video management system, the second plurality of video frames to determine that the first activity of interest is within one or more second video frames of the second plurality of video frames or linking, using the video management system, the second plurality of video frames to one or more second alarms received to determine that the first activity of interest is within one or more second video frames of the second plurality of video frames; generating, using the video management system, a second activity of interest video clip from the one or more second video frames; and displaying the second activity of interest video clip within a second carousel on the display device, wherein the second activity of interest video clip is configured to rotate around a second axis within the second carousel on the display device.

The method may include: generating a first thumbnail associated with the first activity of interest video clip; and displaying the first activity of interest video clip within the first carousel as the first thumbnail on the display device.

The method may include: receiving a play manual input from an input device indicating to play the first activity of interest video clip; and playing the first activity of interest video clip on the display device in response to the play manual input
The method may include: receiving a rotate manual input from an input device to rotate the first thumbnail to a rough center of the display device; rotating the first thumbnail to the rough center of the display device in response to the rotate manual input; and playing the first activity of interest video clip on the display device in response to the rotate manual input.

The method may include that the first axis is a vertical axis.

The method may include that the second axis is a horizontal axis.

The method may include that the first axis is a vertical axis and the second axis is a horizontal axis perpendicular to the first axis.

A non claimed alternative method may include: capturing, using the first video camera, a second plurality of video frames of the first area at a second time; analyzing the second plurality of video frames or linking to one or more second alarms received; determining a second activity of interest within one or more second video frames of the second plurality of video frames; generating a second activity of interest video clip from the one or more second video frames; and displaying the second activity of interest video clip within the first carousel on the display device, wherein the second activity of interest video clip is configured to rotate around the first axis within the first carousel on the display device.

A non claimed alternative method may include: capturing, using the second video camera, a second plurality of video frames of the first area at a second time; analyzing the second plurality of video frames or linking to one or more second alarms received; determining a second activity of interest within one or more second video frames of the second plurality of video frames; generating a second activity of interest video clip from the one or more second video frames; and displaying the second activity of interest video clip within the first carousel on the display device, wherein the second activity of interest video clip is configured to rotate around the first axis within the first carousel on the display device.

The method may include generating a first thumbnail associated with the first activity of interest video clip; and displaying the first activity of interest video clip within the first carousel as the first thumbnail on the display device; receiving a rotate manual input from an input device to rotate the first thumbnail to a rough center of the display device; rotating the first thumbnail to the rough center of the display device in response to the rotate manual input; and enlarging a size of the first thumbnail as the first thumbnail rotates to the rough center, wherein the size of the first thumbnail is at a maximum at the rough center.

The method may include generating a first thumbnail associated with the first activity of interest video clip; displaying the first activity of interest video clip within the first carousel as the first thumbnail on the display device; receiving a rotate manual input from an input device to rotate the first thumbnail away from a rough center of the display device; rotating the first thumbnail away from the rough center of the display device in response to the rotate manual input; and decreasing a size of the first thumbnail as the first thumbnail rotates away from the rough center, wherein the size of the first thumbnail is at a maximum at the rough center.

According to another aspect of the invention, a video management system for analyzing and displaying surveillance video is provided. The video management system includes: a communication device configured to communicate with a first video camera, a second video camera and a computing device, the computing device having a display device, a processor; and a memory including computer-executable instructions that, when executed by the processor, cause the processor to perform operations. The operations include: capturing, using the first video camera, a first plurality of video frames of a first area at a first time; analyzing the first plurality of video frames to determine a first activity of interest within one or more first video frames of the first plurality of video frames or linking the first plurality of video frames to one or more alarms received to determine a first activity of interest within one or more first video frames of the first plurality of video frames; generating a first activity of interest video clip from the one or more first video frames; and transmitting the first activity of interest video clip to the computing device thereby displaying the first activity of interest video clip within a first carousel on a display device, wherein the first activity of interest video clip is configured to rotate around a first axis within the first carousel on the display device. The operations include: capturing, using the second video camera, a second plurality of video frames of at least a portion of the first area at the first time; analyzing the second plurality of video frames to determine that the first activity of interest is within one or more second video frames of the second plurality of video frames or linking the second plurality of video frames to one or more second alarms received to determine that the first activity of interest is within one or more second video frames of the second plurality of video frames; generating a second activity of interest video clip from the one or more second video frames; and transmitting the second activity of interest video clip to the computing device thereby displaying the second activity of interest video clip within a second carousel on the display device, wherein the second activity of interest video clip is configured to rotate around a second axis within the second carousel on the display device.

The operations may further include: generating a first thumbnail associated with the first activity of interest video clip; and displaying the first activity of interest video clip within the first carousel as the first thumbnail on the display device.

The operations may further include: receiving a play manual input from an input device indicating to play the first activity of interest video clip; and playing the first activity of interest video clip on the display device in response to the play manual input from the input device indicating to play the first activity of interest video clip.

The operations may further include: receiving a rotate manual input from an input device to rotate the first thumbnail to the rough center of the display device; rotating the first thumbnail to the rough center of the display device in response to the rotate manual input; and playing the first activity of interest video clip on the display device in response to the rotate manual input.

The first axis may be a vertical axis.

The second axis may be a horizontal axis.

According to another aspect of the invention, a computer program product tangibly embodied on a non-transitory computer readable medium according to claim 15 is provided.

Technical effects of embodiments of the present invention include analyzing surveillance video to determine an activity of interest in the surveillance video and only displaying video clips with an activity of interest in a carousel on a display device.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting. The following descriptions should not be considered limiting in any way. Certain exemplary embodiments will now be described in greater detail, by way of example only, and with reference to the accompanying drawings, in which:
FIG. 1 is a block diagram of an exemplary video surveillance system; and
FIG. 2 is a flow diagram illustrating an exemplary method for analyzing and displaying surveillance video.

A detailed description of one or more embodiments of the invention are presented herein by way of exemplification and not limitation with reference to the Figures.

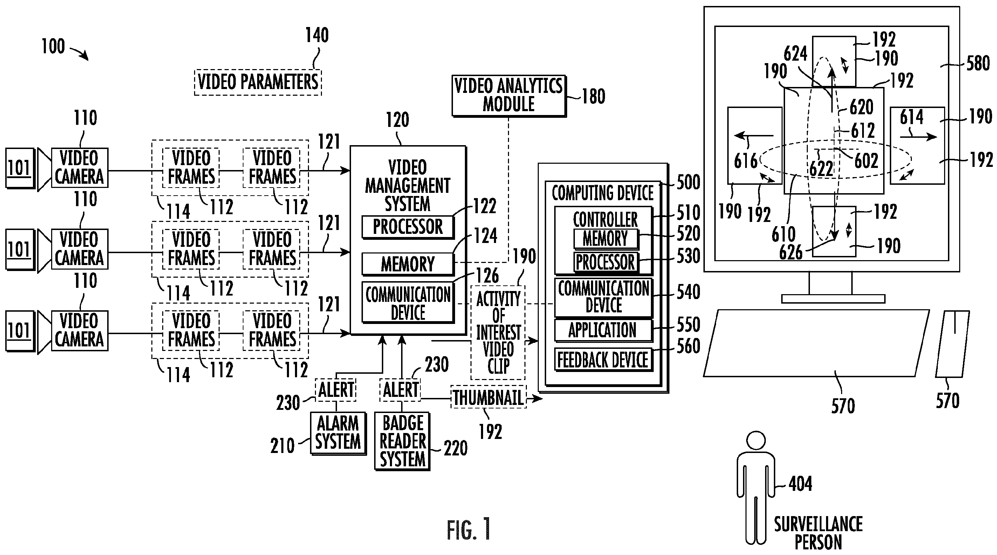

Referring to FIG. 1 a schematic diagram of a video surveillance system 100 is illustrated. It should be appreciated that although particular systems are separately defined in the schematic block diagrams, each or any of the systems may be otherwise combined or separated via hardware and/or software.

The video surveillance system 100 may include one or more video cameras 110, a video management system 120 in electronic communication with each of the one or more video cameras 110, and a computing device 500 in electronic communication with the video management system 120.

The video management system 120 may also be a recorder for the video surveillance system 100. The video management system 120 may be local, remote, or cloud-based relative to the video cameras 110 and the computing device 500.

The video management system 120 includes a processor 122 and an associated memory 124 comprising computer-executable instructions (i.e., computer program product) that, when executed by the processor 122, cause the processor 122 to perform various operations. The processor 122 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 124 may be but is not limited to a random access memory (RAM), read only memory (ROM), or other electronic, optical, magnetic or any other computer readable medium.

The video management system 120 also includes a communication device 126. The communication device 126 may be capable of communication with the video cameras 110 and/or the computing device 500 through wired and/or wireless communications. The communication device 126 may be a software module that handles communications to and from the video cameras 110 or to and from the computing device 500.

The computing device 500 may belong to or be in possession of a surveillance person 404. The surveillance person 404 may be a security person, building manager, or any person in charge of or tasked with monitoring the areas 101 via the video cameras 110.

The computing device 500 may be a desktop computer, a laptop computer, or a mobile computing device that is typically carried by a person, such as, for example a phone, a smart phone, a PDA, a smart watch, a tablet, a laptop, smart glasses, or any other computing device known to one of skill in the art.

The computing device 500 includes a controller 510 configured to control operations of the computing device 500. The controller 510 may be an electronic controller including a processor 530 and an associated memory 520 comprising computer-executable instructions (i.e., computer program product) that, when executed by the processor 530, cause the processor 530 to perform various operations. The processor 530 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 520 may be but is not limited to a random access memory (RAM), read only memory (ROM), or other electronic, optical, magnetic or any other computer readable medium.

It is understood that the computer application 550 may be an application installed on the computing device 500. The computer application 550 may be accessible from computing device 500, such as, for example, a software-as-as service or a website. The computer application 550 may be in communication with the video management system 120 via the internet, a local hardwire network, or a local wireless network.

The computing device 500 includes a communication device 540 configured to communicate one or more wireless or wired signals. The one or more wireless signals may include Wi-Fi, Bluetooth, Zigbee, Sub-GHz RF Channel, cellular, satellite, or any other wireless signal known to one of skill in the art.

The computing device 500 may include a display device 580, such as for example a computer display, an LCD display, an LED display, an OLED display, a touchscreen of a smart phone, tablet, or any other similar display device known to one of the skill in the art. The surveillance person 404 operating the computing device 500 is able to view the computer application 550 through the display device 580. If the computing device 500 is a pair of smart glasses, then the display device 580 may be a transparent lens of the pair of smart glasses.

The computing device 500 includes one or more input device 570 configured to receive a manual input from a user (e.g., human being) of computing device 500. The input device 570 may be a keyboard, a touch screen, a joystick, a knob, a touchpad, one or more physical buttons, a microphone configured to receive a voice command, a camera or sensor configured to receive a gesture command, an inertial measurement unit configured to detect a shake of the computing device 500, or any similar input device known to one of skill in the art. The user operating the computing device 500 may be able to enter data into the computer application 550 through the input device 570. The input device 570 may allow the user operating the computing device 500 to enter data into the computer application 550 via a manual input to input device 570. For example, the user may respond to a prompt on the display device 580 by entering a manual input via the input device 570. In one example, the manual input may be a touch on the touchscreen, a click on a mouse, or a tap on a keyboard button. The display device 580 and the input device 570 may be combined into a single device, such as, for example, a touchscreen on the smart phone. The computing device 500 of FIG. 1 is illustrated as having a keyboard and a mouse, although it should be appreciated that the computing device 500 may not include a keyboard or a mouse in certain instances.

The computing device 500 may also include a feedback device 560. The feedback device 560 may activate in response to a manual input via the input device 570. The feedback device 560 may be a haptic feedback vibration device and/or a speaker emitting a sound. The feedback device 560 may activate to confirm that the manual input entered via the input device 570 was received via the computer application 550. For example, the feedback device 560 may activate by emitting an audible sound or vibrate the computing device 500 to confirm that the manual input entered via the input device 570 was received via the computer application 550.

Each video camera 110 may be positioned to capture video frames 112 of an area 101. The video cameras 110 may capture video frames 112 of areas 101 that may be the same areas or different areas. The areas 101 of each camera 110 may overlap with areas of other cameras 110 either partially or in full. Thus, if one camera 110 were to fail another camera 110 may be activated to capture video frames 112 of the area 101 where the video camera 110 failed. Each video camera 110 may be adjustable to be repositioned to capture the same area 101 or multiple areas 101. While three video cameras 110 are illustrated, it is understood that the embodiments disclosed herein may be applicable to any number of video cameras 110.

The video surveillance system 100 includes a video analytics module 180. The video analytics module 180 may be installed directly on the video management system 120 or the video camera 110. The video cameras 110 is configured to capture video frames 112 and transmit the video frames 112 to the video management system 120. The video frames 112 from one or more video cameras 110 arrive at the video management system 120 as an incoming stream 121. The video frames 112 may be organized into packets 114 by the video camera 110. The video packets 114 contain information such as, for example, an IP address from where the video packets 114 are coming from, an IP address where to send the video packets 114, a type of the video frame 112, a number of video frames 112, time stamps of each video frame 112 and video parameters 140. The video parameters 140 are statistical information regarding the video frames 112 and/or the video packets 114. The video parameters 140 may include but are not limited to time between video frames 112, time between video packets 114, a sequential number of a video frame 112, and a sequential number of a video packet 114, a group of pictures (GOP) structure, a size of the video packet 114 and a real frame per second (FPS) value. The size of the video packet 114 may be used to calculate frame size and bandwidth
The video analytics module 180 may be a software algorithm configured to collect and analyze video frames 112 received at the video management system 120 from the video cameras 110. The video analytics module 180 is configured to collect and analyze the video frames 112 to determine an activity of interest in the video frame. The video analytics module 180 may analyze a single video frame 112 at a time and/or a series of sequential video frames 112 to determine the activity of interest. The video analytics module 180 may utilize self-learning, machine learning, artificial intelligence, neural networks, deep learning, or any other analysis method known to one of skill in the art to determine the activity of interest. An activity of interest may be an event captured by the video camera 110 that may be of interest to the surveillance person 404. The activity of interest may include, but is not limited to, a break-in, a robbery, an assault, a fight, a mugging, a disturbance, a mob, or any similar event that may require security to intervene.

The video analytics module 180 may be configured to compile all of the video frames 112 associated with the activity of interest into an activity of interest video clip 190 that is then transmitted to the computing device 500 for display on the computing device 500. The video analytics module 180 may be configured to determine a single video frame 112 of the video frames 112 within the activity of interest video clip 190 to be used as a thumbnail 192. The thumbnail 192 may be the video frame 112 of the activity of interest video clip 190 that best visually illustrates the activity of interest. The thumbnail 192 may be transmitted to the computing device 500 along with the activity of interest video clip 190.

An activity of interest video clip 190 may be determined from the video frames 112 received from each video camera 110.

Alternatively, the video clips 190 may be linked with alerts 230 received from an alarm system 210 or a badge reader system 220. The alerts 230 may indicate times in the videos frames 112 that may have an activity of interest. For example, the alerts 230 may be badge swipes, access granted or denied, a door forced or held open. The video analytics module 180 may not be present and only alarms 230 are utilized to determine activities of interest. The alarm system 210 may include one or more physical sensors to detect the activity.

The computer application 550 is configured to organize and display the thumbnails 192 of the activity of interest video clips 190 in a first carousel 610 on the display device 580.

The first carousel 610 may rotate the thumbnails 192 around a first axis 612. The first axis 612 may be a vertical axis, as illustrated in FIG. 1. The surveillance person 404 may rotate the thumbnails 192 around the first axis 612 through a rotate manual input, such as, for example, a click, touch, or swipe, in a first direction 614 or a second direction 616 using the input device 570. The second direction 616 being opposite the first direction 614. The first direction 614 may be right and the second direction 616 may be left or the first direction 614 may be left and the second direction 616 may be right.

The thumbnail 192 may be enlarged as it moves towards a rough center 602 of the display device 580 and may shrink as it moves away from the rough center 602. The thumbnail 192 may reach its maximum size at the rough center 602. The activity of interest video clips 190 may automatically begin playing when the thumbnail 192 reaches the rough center 602. Alternatively, the activity of interest video clips 190 may begin playing when the thumbnail 192 when the surveillance person enters a play manual input, such as, for example, a click or tap on the thumbnails 192 through the input device 570.

The surveillance person 404 may quickly bring a thumbnail 192 to the rough center 602 of the display device 580 by clicking or tapping on a thumbnail 192 that is not currently in the rough center 602 using the input device 570. Additionally, the surveillance person 404 may quickly bring a thumbnail 192 to the rough center 602 of the display device 580 by rotating the thumbnails 192 around the first carousel 610 through a quick click, touch, or swipe, in a first direction 614 or a second direction 616 using the input device 570.

The first carousel 610 may contain a single activity of interest video clip 190 for each activity of interest identified by the video analytics module 180, which advantageously allows the surveillance person to quick review each activity of interest identified. The first carousel 610 may contain only activity of interest video clips 190. In other words, the first carousel 610 may contain only video clips that depict an activity of interest. If a video clip does not contain an activity of interest it will not be added to the first carousel 610,

If multiple video cameras 110 have captured the same activity of interest then the activity of interest video clips 190 for the same activity of interest may be organized and displayed in a second carousel 620 on the display device 580. For example, some video cameras 110 may capture the same area 101 and thus may also capture the same activity of interest occurring in that area 101.

The second carousel 620 may rotate the thumbnails 192 relating to the same activity of interest around a second axis 622. The second axis 622 may be a horizontal axis, as illustrated in FIG.1. The second axis 622 may be about perpendicular to the first axis 612, as illustrated in FIG.1. The surveillance person 404 may rotate the thumbnails 192 around the second axis 622 through a rotate manual input, such as, for example, a click, touch, or swipe, in a third direction 624 or a fourth direction 626 using the input device 570. The fourth direction 626 being opposite the third direction 624. The third direction 624 may be up and the fourth direction 626 may be down or the third direction 624 may be down and the fourth direction 626 may be up.

Alternatively, the second axis 622 may be vertical and the first axis 612 may be horizontal. This would result in the first direction 614 and the second direction 616 being up or down, and the third direction 624 and the fourth direction 626 being left or right. It is understood that the embodiment disclosed herein are not limited to these orientations of axis 612, 622 and the axis 612, 622 may be oriented in any other relative orientation.

The thumbnail 192 may be enlarged as it moves towards a rough center 602 of the display device 580 and may shrink as it moves away from the rough center 602. The thumbnail 192 may reach its maximum size at the rough center 602. The activity of interest video clips 190 may automatically begin playing when the thumbnail 192 reaches the rough center 602. Alternatively, the activity of interest video clips 190 may begin playing when the thumbnail 192 when the surveillance person enters a play manual input, such as, for example, a click or tap on the thumbnails 192 through the input device 570.

The surveillance person 404 may quickly bring a thumbnail 192 to the rough center 602 of the display device 580 by clicking or tapping on a thumbnail 192 that is not currently in the rough center 602 using the input device 570. Additionally, the surveillance person 404 may quickly bring a thumbnail 192 to the rough center 602 of the display device 580 by rotating the thumbnails 192 around the second carousel 620 through a quick click, touch, or swipe, in a third direction 624 or a fourth direction 626 using the input device 570.

The second carousel 620 may contain multiple activity of interest video clips 190 for the same activity of interest identified by the video analytics module 180, which advantageously allows the surveillance person to quickly review each activity of interest identified from multiple different camera angles. The second carousel 620 may contain only activity of interest video clips 190. In other words, the second carousel 620 may contain only video clips that depict the same activity of interest but from different cameras 110. If a video clip does not contain an activity of interest it will not be added to the second carousel 620.

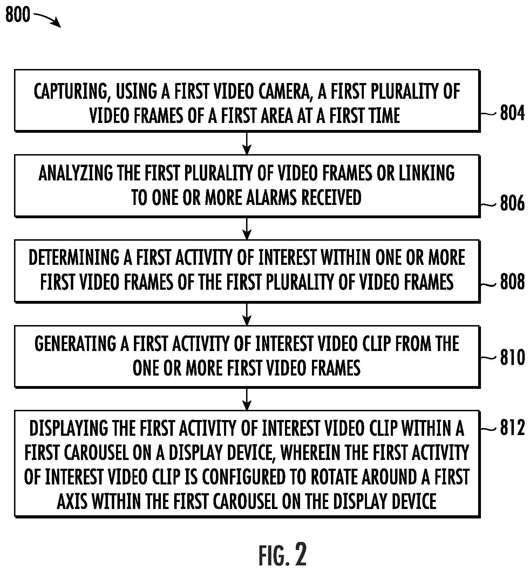

Referring now to FIG. 2, with continued reference to FIG. 1, a flow diagram illustrating an exemplary computer implemented method 800 for analyzing and displaying surveillance video is illustrated. The method 800 may be performed by the video analytics module 180 and/or the application 550.

At block 804, a first video camera 110 captures a first plurality of video frames 112 of a first area 101 at a first time. At block 806, the first plurality of video frames 112 is analyzed or linked to one or more alarms 230 received. At block 808, a first activity of interest within one or more first video frames 112 of the first plurality of video frames 112 is determined. At block 810, a first activity of interest video clip 190 is generated from the one or more first video frames 112.

At block 812, the first activity of interest video clip 190 is displayed within a first carousel 610 on a display device 580. The first activity of interest video clip 190 is configured to rotate around a first axis 612 within the first carousel 610 on the display device 580.

The method 800 may also include that a first thumbnail 192 associated with the first activity of interest video clip 190 is generated and the first activity of interest video clip 190 is displayed within the first carousel 610 as the first thumbnail 192 on a display device 580.

The method 800 may further include that a play manual input is received from the input device 570 indicating to play the first activity of interest video clip 190 and the first activity of interest video clip 190 is played on the display device 580 in response to the play manual input from the input device 570 indicating to play the first activity of interest video clip 190.

The method 800 may yet further include that a rotate manual input is received from the input device 570 to rotate the first thumbnail 192 to the rough center 602 of the display device 580, the first thumbnail 192 is rotated to the rough center 602 of the display device 580 in response to the rotate manual input from the input device 570 to rotate the first thumbnail 192 to the rough center 602 of the display device 580, and the first activity of interest video clip 190 is played on the display device 580 in response to the rotate manual input from the input device 570 to rotate the first thumbnail 192 to the rough center 602 of the display device 580.

The method 800 also includes that a second video camera 110 captures a second plurality of video frames 112 of at least a portion of the first area 101 at the first time. The second plurality of video frames 112 is analyzed or one or more second alarms are received, and then it is determined that the first activity of interest is within one or more second video frames 112 of the second plurality of video frames 112. Then a second activity of interest video clip 190 is generated from the one or more second video frames 112 and the second activity of interest video clip 190 is displayed within a second carousel 620 on the display device 580. The second activity of interest video clip 190 is configured to rotate around a second axis 622 within the second carousel 620 on the display device 580.

The method 800 may yet further include that the first video camera 110 captures a second plurality of video frames 112 of the first area 101 at a second time. The second plurality of video frames 112 is analyzed or one or more second alarms are received, and then a second activity of interest within one or more second video frames 112 of the second plurality of video frames 112 is determined. Then a second activity of interest video clip 190 is generated from the one or more second video frames 112 and the second activity of interest video clip 190 is displayed within the first carousel 610 on the display device 580. The second activity of interest video clip 190 is configured to rotate around the first axis 612 within the first carousel 610 on the display device 580.

The method 800 may yet further include that a second video camera 110 captures a second plurality of video frames 112 of the first area 101 at a second time. The second plurality of video frames 112 is analyzed or one or more second alarms are received, and then a second activity of interest within one or more second video frames 112 of the second plurality of video frames 112 is determined. A second activity of interest video clip 190 is generated from the one or more second video frames 112 and the second activity of interest video clip 190 is displayed within the first carousel 610 on the display device 580. The second activity of interest video clip 190 is configured to rotate around the first axis 612 within the first carousel 610 on the display device 580.

The method 800 may yet further include that a first thumbnail 192 associated with the first activity of interest video clip 190 is generated and the first activity of interest video clip 190 is displayed within the first carousel 610 as the first thumbnail 192 on a display device 580. A rotate manual input from the input device 570 to rotate the first thumbnail 192 to a rough center 602 of the display device 580 is received, the first thumbnail 192 is rotated to a rough center 602, and a size of the first thumbnail 192 is enlarged as the first thumbnail 192 rotates to the rough center 602. The size of the first thumbnail 192 is at a maximum at the rough center 602.

The method 800 may yet further include that a first thumbnail 192 associated with the first activity of interest video clip 190 is generated and the first activity of interest video clip 190 is displayed within the first carousel 610 as the first thumbnail 192 on a display device 580. A rotate manual input from the input device 570 is received to rotate the first thumbnail 192 away from a rough center 602 of the display device 580, the thumbnail is rotated away from the rough center 602, and a size of the first thumbnail 192 is decreased as the first thumbnail 192 rotates away from the rough center 602. The size of the first thumbnail 192 is at a maximum at the rough center 602.

While the above description has described the flow process of FIG. 2 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention as defined by the appended claims. In addition, many modifications may be made to adapt a particular situation or material to the teachings of the present invention without departing from the defined scope. Therefore, it is intended that the present invention not be limited to the particular embodiment disclosed as a best mode contemplated for carrying out this present invention, but that the present invention will include all embodiments falling within the scope of the claims.

## Claims

1. A method for analyzing and displaying surveillance video using a video management system (120) having a processor (122) and a memory (124) comprising computer-executable instructions for the processor (122), the method comprising:
capturing, using a first video camera (110), a first plurality of video frames (112) of a first area (101) at a first time;
analyzing, using the video management system (120), the first plurality of video frames (112) to determine a first activity of interest within one or more first video frames (112) of the first plurality of video frames (112) or linking, using the video management system (120), the first plurality of video frames (112) to one or more alarms (230) received to determine a first activity of interest within one or more first video frames (112) of the first plurality of video frames (112);
generating, using the video management system (120), a first activity of interest video clip (190) from the one or more first video frames (112);
capturing, using a second video camera (110), a second plurality of video frames (112) of at least a portion of the first area (101) at the first time;
analyzing, using the video management system (120), the second plurality of video frames (112) to determine that the first activity of interest is within one or more second video frames (112) of the second plurality of video frames (112) or linking, using the video management system (120), the second plurality of video frames (112) to one or more second alarms (230) received to determine that the first activity of interest is within one or more second video frames (112) of the second plurality of video frames (112);; and
generating, using the video management system (120), a second activity of interest video clip (190) from the one or more second video frames (112),
**characterised in that** the method comprises:
displaying the first activity of interest video clip (190) within a first carousel (610) on a display device (580), wherein the first activity of interest video clip (190) is configured to rotate around a first axis (612) within the first carousel (610) on the display device (580); and
displaying the second activity of interest video clip (190) within a second carousel (620) on the display device (580), wherein the second activity of interest video clip (190) is configured to rotate around a second axis (622) within the second carousel on the display device (580).

2. The method of claim 1, further comprising:
generating a first thumbnail (192) associated with the first activity of interest video clip (190), and displaying the first activity of interest video clip (190) within the first carousel (610) as the first thumbnail (192) on the display device (580).

3. The method of claim 2, further comprising:
receiving a play manual input from an input device (570) indicating to play the first activity of interest video clip (190), and, playing the first activity of interest video clip (190) on the display device (580) in response to the play manual input.

4. The method of claim 2, further comprising:
receiving a rotate manual input from an input device (570) to rotate the first thumbnail (192) to a rough center (602) of the display device (580);
rotating the first thumbnail (192) to the rough center (602) of the display device (580) in response to the rotate manual input; and
playing the first activity of interest video clip (190) on the display device (580) in response to the rotate manual input;
or further comprising:
receiving a rotate manual input from an input device (570) to rotate the first thumbnail (192) to a rough center (602) of the display device (580);
rotating the first thumbnail (192) to the rough center (602) of the display device (580) in response to the rotate manual input; and
enlarging a size of the first thumbnail (192) as the first thumbnail (192) rotates to the rough center (602), wherein the size of the first thumbnail (192) is at a maximum at the rough center (602).

5. The method of claim 2, further comprising:
receiving a rotate manual input from the input device (570) to rotate the first thumbnail (192) away from a rough center (602) of the display device (580);
rotating the first thumbnail (192) away from the rough center (602) of the display device (580) in response to the rotate manual input; and
decreasing a size of the first thumbnail (192) as the first thumbnail (192) rotates away from the rough center (602), wherein the size of the first thumbnail (192) is at a maximum at the rough center.

6. The method of any preceding claim, wherein the first axis is a vertical axis and/or the second axis is a horizontal axis perpendicular to the first axis.

7. A video management system (120) for analyzing and displaying surveillance video, the video management system (120) comprising:
a communication device (126) configured to communicate with a first video camera (110), a second video camera (110) and a computing device (500), the computing device (500) having a display device (580),
a processor (122); and
a memory (124) comprising computer-executable instructions that, when executed by the processor, cause the processor to perform operations, the operations comprising:
capturing, using the first video camera (110), a first plurality of video frames (112) of a first area (101) at a first time;
analyzing the first plurality of video frames (112) to determine a first activity of interest within one or more first video frames (112) of the first plurality of video frames (112) or linking the first plurality of video frames (112) to one or more alarms (230) received to determine a first activity of interest within one or more first video frames (112) of the first plurality of video frames (112);
generating a first activity of interest video clip (190) from the one or more first video frames (112);
capturing, using the second video camera (110), a second plurality of video frames (112) of at least a portion of the first area (101) at the first time;
analyzing the second plurality of video frames (112) to determine that the first activity of interest is within one or more second video frames (112) of the second plurality of video frames (112) or linking the second plurality of video frames (112) to one or more second alarms (230) received to determine that the first activity of interest is within one or more second video frames (112) of the second plurality of video frames (112); and
generating a second activity of interest video clip (190) from the one or more second video frames (112),
**characterised in that** the operations comprise:
transmitting the first activity of interest video clip (190) to the computing device (500) thereby displaying the first activity of interest video clip (190) within a first carousel (610) on the display device (580), wherein the first activity of interest video clip (190) is configured to rotate around a first axis (612) within the first carousel (610) on the display device (580); and
transmitting the second activity of interest video clip (190) to the computing device (500) thereby displaying the second activity of interest video clip (190) within a second carousel on the display device (580), wherein the second activity of interest video clip (190) is configured to rotate around a second axis (622) within the second carousel on the display device (580).

8. The video management system (120) of claim 7, wherein the operations further comprise:
generating a first thumbnail (192) associated with the first activity of interest video clip (190); and
displaying the first activity of interest video clip (190) within the first carousel (610) as the first thumbnail (192) on the display device (580).

9. The video management system (120) of claim 7 or 8, wherein the operations further comprise:
receiving a play manual input from an input device (570) indicating to play the first activity of interest video clip (190); and
playing the first activity of interest video clip (190) on the display device (580) in response to the play manual input from the input device (570) indicating to play the first activity of interest video clip (190).

10. The video management system of claim 8, wherein the operations further comprise:
receiving a rotate manual input from an input device (570) to rotate the first thumbnail (192) to the rough center (602) of the display device (580);
rotating the first thumbnail (192) to the rough center (602) of the display device (580) in response to the rotate manual input; and
playing the first activity of interest video clip (190) on the display device (580) in response to the rotate manual input.

11. The video management system (120) of any one of claims 7 to 10, wherein the first axis (612) is a vertical axis, and/or wherein the second axis (622) is a horizontal axis.

12. The video management system (120) of any one of claim 7 to 11, wherein the one or more alarms (230) received indicate a time in the first plurality of video frames (112) and/or in the second plurality of video frames (112) that may have an activity of interest.

13. A computer program product tangibly embodied on a non-transitory computer readable medium, the computer program product including instructions that, when executed by a processor of a video management system (120) comprising a communication device (126) configured to communicate with a first video camera (110), a second video camera (110) and a computing device (500), the computing device (500) having a display device (580), cause the processor to perform operations comprising:
capturing, using the first video camera (110), a first plurality of video frames (112) of a first area (101) at a first time;
analyzing the first plurality of video frames (112) to determine a first activity of interest within one or more first video frames (112) of the first plurality of video frames (112) or linking to one or more alarms (230) received to determine a first activity of interest within one or more first video frames (112) of the first plurality of video frames (112);
generating a first activity of interest video clip (190) from the one or more first video frames (112);
capturing, using the second video camera (110), a second plurality of video frames (112) of at least a portion of the first area (101) at the first time;
analyzing the second plurality of video frames (112) to determine that the first activity of interest is within one or more second video frames (112) of the second plurality of video frames (112) or linking the second plurality of video frames (112) to one or more second alarms (230) received to determine that the first activity of interest is within one or more second video frames (112) of the second plurality of video frames (112); and
generating a second activity of interest video clip (190) from the one or more second video frames (112),
**characterised in that** the operations comprise:
transmitting the first activity of interest video clip (190) to the computing device (500) thereby displaying the first activity of interest video clip (190) within a first carousel (610) on a display device (580), wherein the first activity of interest video clip (190) is configured to rotate around a first axis (612) within the first carousel (610) on the display device (580); and
transmitting the second activity of interest video clip (190) to the computing device (500) thereby displaying the second activity of interest video clip (190) within a second carousel on the display device (580), wherein the second activity of interest video clip (190) is configured to rotate around a second axis (622) within the second carousel on the display device (580).

## Patentansprüche

1. Verfahren zum Analysieren und Anzeigen von Überwachungsvideos unter Verwendung eines Videomanagementsystems (120), das einen Prozessor (122) und einen Speicher (124) aufweist, der computerausführbare Anweisungen für den Prozessor (122) umfasst, wobei das Verfahren Folgendes umfasst:
Erfassen, unter Verwendung einer ersten Videokamera (110), einer ersten Vielzahl von Videoframes (112) eines ersten Bereichs (101) zu einem ersten Zeitpunkt;
Analysieren, unter Verwendung des Videomanagementsystems (120), der ersten Vielzahl von Videoframes (112), um eine erste Aktivität von Interesse innerhalb eines oder mehrerer erster Videoframes (112) der ersten Vielzahl von Videoframes (112) zu bestimmen, oder Verknüpfen, unter Verwendung des Videomanagementsystems (120), der ersten Vielzahl von Videoframes (112) mit einem oder mehreren Alarmen (230), die empfangen wurden, um eine erste Aktivität von Interesse innerhalb eines oder mehrerer erster Videoframes (112) der ersten Vielzahl von Videoframes (112) zu bestimmen;
Erzeugen, unter Verwendung des Videomanagementsystems (120), eines Videoclips (190) der ersten Aktivität von Interesse aus dem einen oder den mehreren ersten Videoframes (112);
Erfassen, unter Verwendung einer zweiten Videokamera (110), einer zweiten Vielzahl von Videoframes (112) von mindestens einem Abschnitt des ersten Bereichs (101) zum ersten Zeitpunkt;
Analysieren, unter Verwendung des Videomanagementsystems (120), der zweiten Vielzahl von Videoframes (112), um zu bestimmen, dass die erste Aktivität von Interesse innerhalb eines oder mehrerer zweiter Videoframes (112) der zweiten Vielzahl von Videoframes (112) ist, oder Verknüpfen, unter Verwendung des Videomanagementsystems (120), der zweiten Vielzahl von Videoframes (112) mit einem oder mehreren zweiten Alarmen (230), die empfangen wurden, um zu bestimmen, dass die erste Aktivität von Interesse innerhalb eines oder mehrerer zweiter Videoframes (112) der zweiten Vielzahl von Videoframes (112) ist; und
Erzeugen, unter Verwendung des Videomanagementsystems (120), eines Videoclips (190) der zweiten Aktivität von Interesse aus dem einen oder den mehreren zweiten Videoframes (112),
**dadurch gekennzeichnet, dass** das Verfahren Folgendes umfasst:
Anzeigen des Videoclips (190) der ersten Aktivität von Interesse innerhalb eines ersten Karussells (610) auf einer Anzeigevorrichtung (580), wobei der Videoclip (190) der ersten Aktivität von Interesse ausgebildet ist, um sich innerhalb des ersten Karussells (610) auf der Anzeigevorrichtung (580) um eine erste Achse (612) zu drehen; und
Anzeigen des Videoclips (190) der zweiten Aktivität von Interesse innerhalb eines zweiten Karussells (620) auf der Anzeigevorrichtung (580), wobei der Videoclip (190) der zweiten Aktivität von Interesse ausgebildet ist, um sich innerhalb des zweiten Karussells auf der Anzeigevorrichtung (580) um eine zweite Achse (622) zu drehen.

2. Verfahren nach Anspruch 1, weiter umfassend:
Erzeugen eines ersten Vorschaubildes (192), das mit dem Videoclip (190) der ersten Aktivität von Interesse assoziiert ist, und Anzeigen des Videoclips (190) der ersten Aktivität von Interesse innerhalb des ersten Karussells (610) als erstes Vorschaubild (192) auf der Anzeigevorrichtung (580).

3. Verfahren nach Anspruch 2, weiter umfassend:
Empfangen einer manuellen Abspieleingabe von einer Eingabevorrichtung (570), die angibt, dass der Videoclip (190) der ersten Aktivität von Interesse abgespielt werden soll, und Abspielen des Videoclips (190) der ersten Aktivität von Interesse auf der Anzeigevorrichtung (580) als Antwort auf die manuelle Abspieleingabe.

4. Verfahren nach Anspruch 2, weiter umfassend:
Empfangen einer manuellen Dreheingabe von einer Eingabevorrichtung (570), um das erste Vorschaubild (192) in eine ungefähre Mitte (602) der Anzeigevorrichtung (580) zu drehen;
Drehen des ersten Vorschaubildes (192) in die ungefähre Mitte (602) der Anzeigevorrichtung (580) als Antwort auf die manuelle Dreheingabe; und
Abspielen des Videoclips (190) der ersten Aktivität von Interesse auf der Anzeigevorrichtung (580) als Antwort auf die manuelle Dreheingabe;
oder weiter umfassend:
Empfangen einer manuellen Dreheingabe von einer Eingabevorrichtung (570), um das erste Vorschaubild (192) in eine ungefähre Mitte (602) der Anzeigevorrichtung (580) zu drehen;
Drehen des ersten Vorschaubilds (192) in die ungefähre Mitte (602) der Anzeigevorrichtung (580) als Antwort auf die manuelle Dreheingabe; und
Vergrößern einer Größe des ersten Vorschaubilds (192), während sich das erste Vorschaubild (192) in die ungefähre Mitte (602) dreht, wobei die Größe des ersten Vorschaubilds (192) in der ungefähren Mitte (602) an einem Maximum ist.

5. Verfahren nach Anspruch 2, weiter umfassend:
Empfangen einer manuellen Dreheingabe von der Eingabevorrichtung (570), um das erste Vorschaubild (192) von einer ungefähren Mitte (602) der Anzeigevorrichtung (580) weg zu drehen;
Drehen des ersten Vorschaubilds (192) weg von der ungefähren Mitte (602) der Anzeigevorrichtung (580) als Antwort auf die manuelle Dreheingabe; und
Verringern einer Größe des ersten Vorschaubilds (192), während sich das erste Vorschaubild (192) weg von der ungefähren Mitte (602) dreht, wobei die Größe des ersten Vorschaubilds (192) in der ungefähren Mitte an einem Maximum ist.

6. Verfahren nach einem vorstehenden Anspruch, wobei die erste Achse eine vertikale Achse ist und/oder die zweite Achse eine horizontale Achse senkrecht zur ersten Achse ist.

7. Videomanagementsystem (120) zum Analysieren und Anzeigen von Überwachungsvideos, wobei das Videomanagementsystem (120) Folgendes umfasst:
eine Kommunikationsvorrichtung (126), die ausgebildet ist, um mit einer ersten Videokamera (110), einer zweiten Videokamera (110) und einer Rechenvorrichtung (500) zu kommunizieren, wobei die Rechenvorrichtung (500) eine Anzeigevorrichtung (580) aufweist,
einen Prozessor (122); und
einen Speicher (124), der computerausführbare Anweisungen umfasst, die, wenn sie vom Prozessor ausgeführt werden, den Prozessor veranlassen, Operationen durchzuführen, wobei die Operationen Folgendes umfassen:
Erfassen, unter Verwendung der ersten Videokamera (110), einer ersten Vielzahl von Videoframes (112) eines ersten Bereichs (101) zu einem ersten Zeitpunkt;
Analysieren der ersten Vielzahl von Videoframes (112), um eine erste Aktivität von Interesse innerhalb eines oder mehrerer erster Videoframes (112) der ersten Vielzahl von Videoframes (112) zu bestimmen, oder Verknüpfen der ersten Vielzahl von Videoframes (112) mit einem oder mehreren Alarmen (230), die empfangen wurden, um eine erste Aktivität von Interesse innerhalb eines oder mehrerer erster Videoframes (112) der ersten Vielzahl von Videoframes (112) zu bestimmen;
Erzeugen eines Videoclips (190) der ersten Aktivität von Interesse aus dem einen oder den mehreren ersten Videoframes (112);
Erfassen, unter Verwendung der zweiten Videokamera (110), einer zweiten Vielzahl von Videoframes (112) von mindestens einem Abschnitt des ersten Bereichs (101) zum ersten Zeitpunkt;
Analysieren der zweiten Vielzahl von Videoframes (112), um zu bestimmen, dass die erste Aktivität von Interesse innerhalb eines oder mehrerer zweiter Videoframes (112) der zweiten Vielzahl von Videoframes (112) ist, oder Verknüpfen der zweiten Vielzahl von Videoframes (112) mit einem oder mehreren zweiten Alarmen (230), die empfangen wurden, um zu bestimmen, dass die erste Aktivität von Interesse innerhalb eines oder mehrerer zweiter Videoframes (112) der zweiten Vielzahl von Videoframes (112) ist; und
Erzeugen eines Videoclips (190) der zweiten Aktivität von Interesse aus dem einen oder den mehreren zweiten Videoframes (112),
**dadurch gekennzeichnet, dass** die Operationen Folgendes umfassen:
Übertragen des Videoclips (190) der ersten Aktivität von Interesse an die Rechenvorrichtung (500), wodurch der Videoclip (190) der ersten Aktivität von Interesse innerhalb eines ersten Karussells (610) auf der Anzeigevorrichtung (580) angezeigt wird, wobei der Videoclip (190) der ersten Aktivität von Interesse ausgebildet ist, um sich innerhalb des ersten Karussells (610) auf der Anzeigevorrichtung (580) um eine erste Achse (612) zu drehen; und
Übertragen des Videoclips (190) der zweiten Aktivität von Interesse an die Rechenvorrichtung (500), wodurch der Videoclip (190) der zweiten Aktivität von Interesse innerhalb eines zweiten Karussells auf der Anzeigevorrichtung (580) angezeigt wird, wobei der Videoclip (190) der zweiten Aktivität von Interesse ausgebildet ist, um sich innerhalb des zweiten Karussells auf der Anzeigevorrichtung (580) um die zweite Achse (622) zu drehen.

8. Videomanagementsystem (120) nach Anspruch 7, wobei die Operationen weiter Folgendes umfassen:
Erzeugen eines ersten Vorschaubilds (192), das mit dem Videoclip (190) der ersten Aktivität von Interesse assoziiert ist; und
Anzeigen des Videoclips (190) der ersten Aktivität von Interesse innerhalb des ersten Karussells (610) als das erste Vorschaubild (192) auf der Anzeigevorrichtung (580).

9. Videomanagementsystem (120) nach Anspruch 7 oder 8,
wobei die Operationen weiter Folgendes umfassen:
Empfangen einer manuellen Abspieleingabe von einer Eingabevorrichtung (570), die angibt, dass der Videoclip (190) der ersten Aktivität von Interesse abgespielt werden soll; und
Abspielen des Videoclips (190) der ersten Aktivität von Interesse auf der Anzeigevorrichtung (580) als Antwort auf die manuelle Abspieleingabe von der Eingabevorrichtung (570), die angibt, dass der Videoclip (190) der ersten Aktivität von Interesse abgespielt werden soll.

10. Videomanagementsystem nach Anspruch 8, wobei die Operationen weiter Folgendes umfassen:
Empfangen einer manuellen Dreheingabe von einer Eingabevorrichtung (570), um das erste Vorschaubild (192) in die ungefähre Mitte (602) der Anzeigevorrichtung (580) zu drehen;
Drehen des ersten Vorschaubilds (192) in die ungefähre Mitte (602) der Anzeigevorrichtung (580) als Antwort auf die manuelle Dreheingabe; und
Abspielen des Videoclips (190) der ersten Aktivität von Interesse auf der Anzeigevorrichtung (580) als Antwort auf die manuelle Dreheingabe.

11. Videomanagementsystem (120) nach einem der Ansprüche 7 bis 10, wobei die erste Achse (612) eine vertikale Achse ist und/oder wobei die zweite Achse (622) eine horizontale Achse ist.

12. Videomanagementsystem (120) nach einem der Ansprüche 7 bis 11, wobei die einen oder mehreren empfangenen Alarme (230) einen Zeitpunkt in der ersten Vielzahl von Videoframes (112) und/oder in der zweiten Vielzahl von Videoframes (112) angeben, der eine Aktivität von Interesse aufweisen könnte.

13. Computerprogrammprodukt, greifbar verkörpert auf einem nicht flüchtigen, computerlesbaren Medium, wobei das Computerprogrammprodukt Anweisungen einschließt, die, wenn sie von einem Prozessor eines Videomanagementsystems (120), umfassend eine Kommunikationsvorrichtung (126), die ausgebildet ist, um mit einer ersten Videokamera (110), einer zweiten Videokamera (110) und einer Rechenvorrichtung (500) zu kommunizieren, wobei die Rechenvorrichtung (500) eine Anzeigevorrichtung (580) aufweist, ausgeführt werden, den Prozessor veranlassen, Operationen durchzuführen, die Folgendes umfassen:
Erfassen, unter Verwendung der ersten Videokamera (110), einer ersten Vielzahl von Videoframes (112) eines ersten Bereichs (101) zu einem ersten Zeitpunkt;
Analysieren der ersten Vielzahl von Videoframes (112), um eine erste Aktivität von Interesse innerhalb eines oder mehrerer erster Videoframes (112) der ersten Vielzahl von Videoframes (112) zu bestimmen, oder Verknüpfen mit einem oder mehreren Alarmen (230), die empfangen wurden, um eine erste Aktivität von Interesse innerhalb eines oder mehrerer erster Videoframes (112) der ersten Vielzahl von Videoframes (112) zu bestimmen;
Erzeugen eines Videoclips (190) der ersten Aktivität von Interesse aus dem einen oder den mehreren ersten Videoframes (112);
Erfassen, unter Verwendung der zweiten Videokamera (110), einer zweiten Vielzahl von Videoframes (112) von mindestens einem Abschnitt des ersten Bereichs (101) zum ersten Zeitpunkt;
Analysieren der zweiten Vielzahl von Videoframes (112), um zu bestimmen, dass die erste Aktivität von Interesse innerhalb eines oder mehrerer zweiter Videoframes (112) der zweiten Vielzahl von Videoframes (112) ist, oder Verknüpfen der zweiten Vielzahl von Videoframes (112) mit einem oder mehreren zweiten Alarmen (230), die empfangen wurden, um zu bestimmen, dass die erste Aktivität von Interesse innerhalb eines oder mehrerer zweiter Videoframes (112) der zweiten Vielzahl von Videoframes (112) ist; und
Erzeugen eines Videoclips (190) der zweiten Aktivität von Interesse aus dem einen oder den mehreren zweiten Videoframes (112),
**dadurch gekennzeichnet, dass** die Operationen Folgendes umfassen:
Übertragen des Videoclips (190) der ersten Aktivität von Interesse an die Rechenvorrichtung (500), wodurch der Videoclip (190) der ersten Aktivität von Interesse innerhalb eines ersten Karussells (610) auf einer Anzeigevorrichtung (580) angezeigt wird, wobei der Videoclip (190) der ersten Aktivität von Interesse ausgebildet ist, um sich innerhalb des ersten Karussells (610) auf der Anzeigevorrichtung (580) um eine erste Achse (612) zu drehen; und
Übertragen des Videoclips (190) der zweiten Aktivität von Interesse an die Rechenvorrichtung (500), wodurch der Videoclip (190) der zweiten Aktivität von Interesse innerhalb eines zweiten Karussells auf der Anzeigevorrichtung (580) angezeigt wird, wobei der Videoclip (190) der zweiten Aktivität von Interesse ausgebildet ist, um sich innerhalb des zweiten Karussells auf der Anzeigevorrichtung (580) um eine zweite Achse (622) zu drehen.

## Revendications

1. Procédé pour analyser et afficher une vidéo de surveillance en utilisant un système de gestion vidéo (120) présentant un processeur (122) et une mémoire (124) comprenant des instructions exécutables par ordinateur pour le processeur (122), le procédé comprenant :
la capture, au moyen d'une première caméra vidéo (110), d'une première pluralité de trames vidéo (112) d'une première zone (101) à un premier instant ;
l'analyse, au moyen du système de gestion vidéo (120), de la première pluralité de trames vidéo (112) pour déterminer une première activité d'intérêt dans une ou plusieurs premières trames vidéo (112) de la première pluralité de trames vidéo (112) ou la liaison, au moyen du système de gestion vidéo (120), de la première pluralité de trames vidéo (112) à une ou plusieurs alarmes (230) reçues pour déterminer une première activité d'intérêt dans une ou plusieurs premières trames vidéo (112) de la première pluralité de trames vidéo (112) ;
la génération, au moyen du système de gestion vidéo (120), d'un premier clip vidéo d'activité d'intérêt (190) à partir de la ou des premières trames vidéo (112) ;
la capture, au moyen d'une seconde caméra vidéo (110), d'une seconde pluralité de trames vidéo (112) d'au moins une partie de la première zone (101) au premier instant ;
l'analyse, au moyen du système de gestion vidéo (120), de la seconde pluralité de trames vidéo (112) pour déterminer que la première activité d'intérêt est dans une ou plusieurs secondes trames vidéo (112) de la seconde pluralité de trames vidéo (112) ou la liaison, au moyen du système de gestion vidéo (120), de la seconde pluralité de trames vidéo (112) à une ou plusieurs secondes alarmes (230) reçues pour déterminer que la première activité d'intérêt est dans une ou plusieurs secondes trames vidéo (112) de la seconde pluralité de trames vidéo (112) ; et
la génération, au moyen du système de gestion vidéo (120), d'un second clip vidéo d'activité d'intérêt (190) à partir d'une ou de plusieurs secondes trames vidéo (112),
**caractérisé en ce que** le procédé comprend :
l'affichage du second clip vidéo d'activité d'intérêt (190) à l'intérieur d'un premier carrousel (610) sur un dispositif d'affichage (580), dans lequel le premier clip vidéo d'activité d'intérêt (190) est configuré pour tourner autour d'un premier axe (612) à l'intérieur du premier carrousel (610) sur le dispositif d'affichage (580) ; et
l'affichage du second clip vidéo d'activité d'intérêt (190) à l'intérieur d'un second carrousel (620) sur le dispositif d'affichage (580), dans lequel le second clip vidéo d'activité d'intérêt (190) est configuré pour tourner autour d'un second axe (622) à l'intérieur du second carrousel sur le dispositif d'affichage (580).

2. Procédé selon la revendication 1, comprenant en outre :
la génération d'une première vignette (192) associée au premier clip vidéo d'activité d'intérêt (190), et l'affichage du premier clip vidéo d'activité d'intérêt (190) à l'intérieur du premier carrousel (610) en tant que première vignette (192) sur le dispositif d'affichage (580).

3. Procédé selon la revendication 2, comprenant en outre :
la réception d'une entrée manuelle de lecture en provenance d'un dispositif d'entrée (570) indiquant la lecture du premier clip vidéo d'activité d'intérêt (190), et la lecture du premier clip vidéo d'activité d'intérêt (190) sur le dispositif d'affichage (580) en réponse à l'entrée manuelle de lecture.

4. Procédé selon la revendication 2, comprenant en outre :
la réception d'une entrée manuelle de rotation en provenance d'un dispositif d'entrée (570) pour faire tourner la première vignette (192) vers un centre approximatif (602) du dispositif d'affichage (580) ;
la rotation de la première vignette (192) vers le centre approximatif (602) du dispositif d'affichage (580) en réponse à l'entrée manuelle de rotation ; et
la lecture du premier clip vidéo d'activité d'intérêt (190) sur le dispositif d'affichage (580) en réponse à l'entrée manuelle de rotation ;
ou comprenant en outre :
la réception d'une entrée manuelle de rotation en provenance d'un dispositif d'entrée (570) pour faire tourner la première vignette (192) vers un centre approximatif (602) du dispositif d'affichage (580) ;
la rotation de la première vignette (192) vers le centre approximatif (602) du dispositif d'affichage (580) en réponse à l'entrée manuelle de rotation ; et
l'augmentation d'une taille de la première vignette (192) à mesure que la première vignette (192) tourne vers le centre approximatif (602), dans lequel la taille de la première vignette (192) est à un maximum au centre approximatif (602).

5. Procédé selon la revendication 2, comprenant en outre :
la réception d'une entrée manuelle de rotation en provenance du dispositif d'entrée (570) pour faire tourner la première vignette (192) à l'écart d'un centre approximatif (602) du dispositif d'affichage (580) ;
la rotation de la première vignette (192) à l'écart du centre approximatif (602) du dispositif d'affichage (580) en réponse à l'entrée manuelle de rotation ; et
la réduction d'une taille de la première vignette (192) à mesure que la première vignette (192) est tournée à l'écart du centre approximatif (602), dans lequel la taille de la première vignette (192) est à un maximum au niveau du centre approximatif.

6. Procédé selon une quelconque revendication précédente, dans lequel le premier axe est un axe vertical et/ou le second axe est un axe horizontal perpendiculaire au premier axe.

7. Système de gestion vidéo (120) pour analyser et afficher une vidéo de surveillance, le système de gestion vidéo (120) comprenant :
un dispositif de communication (126) configuré pour communiquer avec une première caméra vidéo (110), une seconde caméra vidéo (110) et un dispositif informatique (500), le dispositif informatique (500) présentant un dispositif d'affichage (580),
un processeur (122) ; et
une mémoire (124) comprenant des instructions exécutables par ordinateur qui, lorsqu'elles sont exécutées par le processeur, amènent le processeur à réaliser des opérations, les opérations comprenant :
la capture, au moyen de la première caméra vidéo (110), d'une première pluralité de trames vidéo (112) d'une première zone (101) à un premier instant ;
l'analyse de la première pluralité de trames vidéo (112) pour déterminer une première activité d'intérêt dans une ou plusieurs premières trames vidéo (112) de la première pluralité de trames vidéo (112) ou la liaison de la première pluralité de trames vidéo (112) à une ou plusieurs alarmes (230) reçues pour déterminer une première activité d'intérêt dans une ou plusieurs premières trames vidéo (112) de la première pluralité de trames vidéo (112) ;
la génération d'un premier clip vidéo d'activité d'intérêt (190) à partir d'une ou de plusieurs premières trames vidéo (112) ;
la capture, au moyen de la seconde caméra vidéo (110), d'une seconde pluralité de trames vidéo (112) d'au moins une partie de la première zone (101) au premier instant ;
l'analyse de la seconde pluralité de trames vidéo (112) pour déterminer que la première activité d'intérêt est dans une ou plusieurs secondes trames vidéo (112) de la seconde pluralité de trames vidéo (112) ou la liaison de la seconde pluralité de trames vidéo (112) à une ou plusieurs secondes alarmes (230) reçues pour déterminer que la première activité d'intérêt est dans une ou plusieurs secondes trames vidéo (112) de la seconde pluralité de trames vidéo (112) ; et
la génération d'un second clip vidéo d'activité d'intérêt (190) à partir d'une ou de plusieurs secondes trames vidéo (112),
**caractérisé en ce que** les opérations comprennent :
la transmission du premier clip vidéo d'activité d'intérêt (190) au dispositif informatique (500), affichant ainsi le premier clip vidéo d'activité d'intérêt (190) à l'intérieur d'un premier carrousel (610) sur le dispositif d'affichage (580), dans lequel le premier clip vidéo d'activité d'intérêt (190) est configuré pour tourner autour d'un premier axe (612) à l'intérieur du premier carrousel (610) sur le dispositif d'affichage (580) ; et
du second clip vidéo d'activité d'intérêt (190) au dispositif informatique (500), affichant ainsi le second clip vidéo d'activité d'intérêt (190) à l'intérieur d'un second carrousel sur le dispositif d'affichage (580), dans lequel le second clip vidéo d'activité d'intérêt (190) est configuré pour tourner autour d'un second axe (622) à l'intérieur du second carrousel sur le dispositif d'affichage (580).

8. Système de gestion vidéo (120) selon la revendication 7, dans lequel les opérations comprennent en outre :
la génération d'une première vignette (192) associée au premier clip vidéo d'activité d'intérêt (190) ; et
l'affichage du premier clip vidéo d'activité d'intérêt (190) à l'intérieur du premier carrousel (610) en tant que première vignette (192) sur le dispositif d'affichage (580).

9. Système de gestion vidéo (120) selon la revendication *7* ou 8,
dans lequel les opérations comprennent en outre :
la réception d'une entrée manuelle de lecture provenant d'un dispositif d'entrée (570) indiquant la lecture du premier clip vidéo d'activité d'intérêt (190) ; et
la lecture du premier clip vidéo d'activité d'intérêt (190) sur le dispositif d'affichage (580) en réponse à l'entrée manuelle de lecture en provenance du dispositif d'entrée (570) indiquant la lecture du premier clip vidéo d'activité d'intérêt (190).

10. Système de gestion vidéo selon la revendication 8, dans lequel les opérations comprennent en outre :
la réception d'une entrée manuelle de rotation en provenance d'un dispositif d'entrée (570) pour faire tourner la première vignette (192) vers le centre approximatif (602) du dispositif d'affichage (580) ;
la rotation de la première vignette (192) vers le centre approximatif (602) du dispositif d'affichage (580) en réponse à l'entrée manuelle de rotation ; et
la lecture du premier clip vidéo d'activité d'intérêt (190) sur le dispositif d'affichage (580) en réponse à l'entrée manuelle de rotation.

11. Système de gestion vidéo (120) selon l'une quelconque des revendications 7 à 10, dans lequel le premier axe (612) est un axe vertical, et/ou dans lequel le second axe (622) est un axe horizontal.

12. Système de gestion vidéo (120) selon l'une quelconque des revendications 7 à 11, dans lequel la ou les alarmes (230) reçues indiquent un instant dans la première pluralité de trames vidéo (112) et/ou dans la seconde pluralité de trames vidéo (112) susceptible de présenter une activité d'intérêt.

13. Produit-programme d'ordinateur incorporé de manière tangible sur un support lisible par ordinateur non transitoire, le produit-programme d'ordinateur comprenant des instructions qui, lorsqu'elles sont exécutées par un processeur d'un système de gestion vidéo (120) comprenant un dispositif de communication (126) configuré pour communiquer avec une première caméra vidéo (110), une seconde caméra vidéo (110) et un dispositif informatique (500), le dispositif informatique (500) présentant un dispositif d'affichage (580), amènent le processeur à réaliser des opérations comprenant :
la capture, au moyen de la première caméra vidéo (110), d'une première pluralité de trames vidéo (112) d'une première zone (101) à un premier instant ;
l'analyse de la première pluralité de trames vidéo (112) pour déterminer une première activité d'intérêt dans une ou plusieurs premières trames vidéo (112) de la première pluralité de trames vidéo (112) ou la liaison d'une ou de plusieurs alarmes (230) reçues pour déterminer une première activité d'intérêt dans une ou plusieurs premières trames vidéo (112) de la première pluralité de trames vidéo (112) ;
la génération d'un premier clip vidéo d'activité d'intérêt (190) à partir d'une ou de plusieurs premières trames vidéo (112) ;
la capture, au moyen de la seconde caméra vidéo (110), d'une seconde pluralité de trames vidéo (112) d'au moins une partie de la première zone (101) au premier instant ;
l'analyse de la seconde pluralité de trames vidéo (112) pour déterminer que la première activité d'intérêt est dans une ou plusieurs secondes trames vidéo (112) de la seconde pluralité de trames vidéo (112) ou la liaison de la seconde pluralité de trames vidéo (112) à une ou plusieurs secondes alarmes (230) reçues pour déterminer que la première activité d'intérêt est dans une ou plusieurs secondes trames vidéo (112) de la seconde pluralité de trames vidéo (112) ; et
la génération d'un second clip vidéo d'activité d'intérêt (190) à partir d'une ou de plusieurs secondes trames vidéo (112),
**caractérisé en ce que** les opérations comprennent :
la transmission du premier clip vidéo d'activité d'intérêt (190) au dispositif informatique (500), affichant ainsi le premier clip vidéo d'activité d'intérêt (190) à l'intérieur d'un premier carrousel (610) sur un dispositif d'affichage (580), dans lequel le premier clip vidéo d'activité d'intérêt (190) est configuré pour tourner autour d'un premier axe (612) à l'intérieur du premier carrousel (610) sur le dispositif d'affichage (580) ; et
la transmission du second clip vidéo d'activité d'intérêt (190) au dispositif informatique (500), affichant ainsi le second clip vidéo d'activité d'intérêt (190) à l'intérieur d'un second carrousel sur le dispositif d'affichage (580), dans lequel le second clip vidéo d'activité d'intérêt (190) est configuré pour tourner autour d'un second axe (622) à l'intérieur du second carrousel sur le dispositif d'affichage (580).
